(19) Europäisches Patentamt
European Patent Office
Office européen des brevets

(11) **EP 4 418 777 A1**

(12) **EUROPEAN PATENT APPLICATION**
published in accordance with Art. 153(4) EPC

(43) Date of publication:
**21.08.2024 Bulletin 2024/34**

(21) Application number: **21960332.1**

(22) Date of filing: **15.10.2021**

(51) International Patent Classification (IPC):
*H04W 68/02* (2009.01)

(52) Cooperative Patent Classification (CPC):
Y02D 30/70

(86) International application number:
**PCT/CN2021/124231**

(87) International publication number:
**WO 2023/060603 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Yanhua**
**Beijing, 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **PAGING GROUPING METHOD AND APPARATUS, TERMINAL DEVICE, BASE STATION, AND STORAGE MEDIUM**

(57) The present disclosure relates to the technical field of communications, and relates to a paging grouping method and apparatus, a terminal device, a base station, and a storage medium. The method comprises: sending to a terminal device indication information used for indicating a paging grouping mode of the terminal device. According to the paging grouping method provided by the present disclosure, it can be ensured that the base station and the terminal device can select a consistent paging grouping mode, thereby ensuring normal running of a paging process.

sending indication information to a terminal, the indication information indicating a paging grouping mode of the terminal — 101

FIG. 1

EP 4 418 777 A1

**Description**

**TECHNICAL FIELD**

The disclosure relates to the field of communication technology, more particularly, to a paging grouping method, an apparatus, a terminal, a base station, and a storage medium.

**BACKGROUND**

In a communication system, in order to save power consumption of a terminal, a way of paging grouping is used to performing paging grouping on the terminal. Currently, there are two types of paging grouping modes, and a base station usually needs to notify the terminal of a paging grouping mode supported by the base station, so that the base station and the terminal can achieve consistency when selecting the paging grouping mode.

**SUMMARY**

The disclosure provides a paging grouping method, an apparatus, a terminal, a base station, and a storage medium, to provide a method for a base station to notify a paging grouping mode supported by the base station.

According to an aspect, embodiments of the disclosure provide a paging grouping method, performed by a base station. The method includes:

sending indication information to a terminal, the indication information indicating a paging grouping mode of the terminal.

According to another aspect, embodiments of the disclosure provide a paging grouping method, performed by a base station. The method includes:

receiving indication information sent by a base station, the indication information indicating a paging grouping mode of the terminal.

According to an aspect, embodiments of the disclosure provide a paging grouping apparatus. The apparatus includes:

a sending module, configured to send indication information to a terminal, the indication information indicating a paging grouping mode of the terminal.

According to an aspect, embodiments of the disclosure provide a paging grouping apparatus. The apparatus includes:

a receiving module, configured to receive indication information sent by a base station, the indication information indicating a paging grouping mode of the terminal.

According to an aspect, embodiments of the disclosure provide a communication device. The communication device includes a processor and a memory having a computer program stored thereon. When the computer program stored in the memory is executed by the processor, the communication device is caused to implement the method described in the aspect above.

According to an aspect, embodiments of the disclosure provide a communication device. The communication device includes a processor and a memory having a computer program stored thereon. When the computer program stored in the memory is executed by the processor, the communication device is caused to implement the method described in the another aspect above.

According to an aspect, embodiments of the disclosure provide a communication device. The communication device includes a processor and an interface circuit.

The interface circuit is configured to receive code instructions and transmit them to the processor.

The processor is configured to execute the code instructions to perform the method described in the aspect above.

According to an aspect, embodiments of the disclosure provide a communication device. The communication device includes a processor and an interface circuit.

The interface circuit is configured to receive code instructions and transmit them to the processor.

The processor is configured to execute the code instructions to perform the method described in the another aspect above.

According to an aspect, embodiments of the disclosure provide a computer-readable storage medium for storing instructions. When the instructions are executed, the method of the aspect is implemented.

According to an aspect, embodiments of the disclosure provide a computer-readable storage medium for storing instructions. When the instructions are executed, the method of the another aspect is implemented.

In conclusion, in the paging grouping method, the paging grouping apparatus, the terminal, the base station, and the storage medium provided in the embodiments of the disclosure, the base station may send the indication information indicating the paging grouping mode of the terminal to the terminal, in which the indication information indicates support for at least one of following paging grouping modes: a network-assigned paging grouping mode; or a user equipment-identity (UE-ID)-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Additional aspects and advantages of the disclosure will be partially provided in the following description, which will become apparent from the following description, or will be understood through the practice of this disclosure.

## BRIEF DESCRIPTION OF THE DRAWINGS

The above and/or additional aspects and advantages of the disclosure will become apparent and easily understood from the description of embodiments below in conjunction with the accompany drawings.

FIG. 1 is a flowchart of a paging grouping method provided by an embodiment of the disclosure.

FIG. 2 is a flowchart of a paging grouping method provided by an embodiment of the disclosure.

FIG. 3 is a flowchart of a paging grouping method provided by another embodiment of the disclosure.

FIG. 4 is a flowchart of a paging grouping method provided by another embodiment of the disclosure.

FIG. 5 is a flowchart of a paging grouping method provided by another embodiment of the disclosure.

FIG. 6 is a flowchart of a paging grouping method provided by another embodiment of the disclosure.

FIG. 7 is a flowchart of a paging grouping method provided by another embodiment of the disclosure.

FIG. 8 is a flowchart of a paging grouping method provided by another embodiment of the disclosure.

FIG. 9 is a flowchart of a paging grouping method provided by another embodiment of the disclosure.

FIG. 10 is a flowchart of a paging grouping method provided by another embodiment of the disclosure.

FIG. 11 is a flowchart of a paging grouping method provided by another embodiment of the disclosure.

FIG. 12 is a flowchart of a paging grouping method provided by another embodiment of the disclosure.

FIG. 13 is a block diagram of a paging grouping apparatus provided by another embodiment of the disclosure.

FIG. 14 is a block diagram of a paging grouping apparatus provided by another embodiment of the disclosure.

FIG. 15 is a block diagram of a terminal provided by an embodiment of the disclosure.

FIG. 16 is a block diagram of a base station provided by an embodiment of the disclosure.

## DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the embodiments of the disclosure as recited in the appended claims.

The terms used in the embodiments of the disclosure are only for the purpose of describing specific embodiments, and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

Embodiments of the disclosure are described in detail below, and examples of the embodiments are shown in the accompanying drawings, where the same or similar symbols throughout represent the same or similar elements. The embodiments described below with reference to the accompanying drawings are exemplary and intended to explain the disclosure, but cannot be understood as limiting the disclosure.

The following provides a detailed introduction to a paging grouping method and apparatus provided in the disclosure with reference to the accompanying drawings.

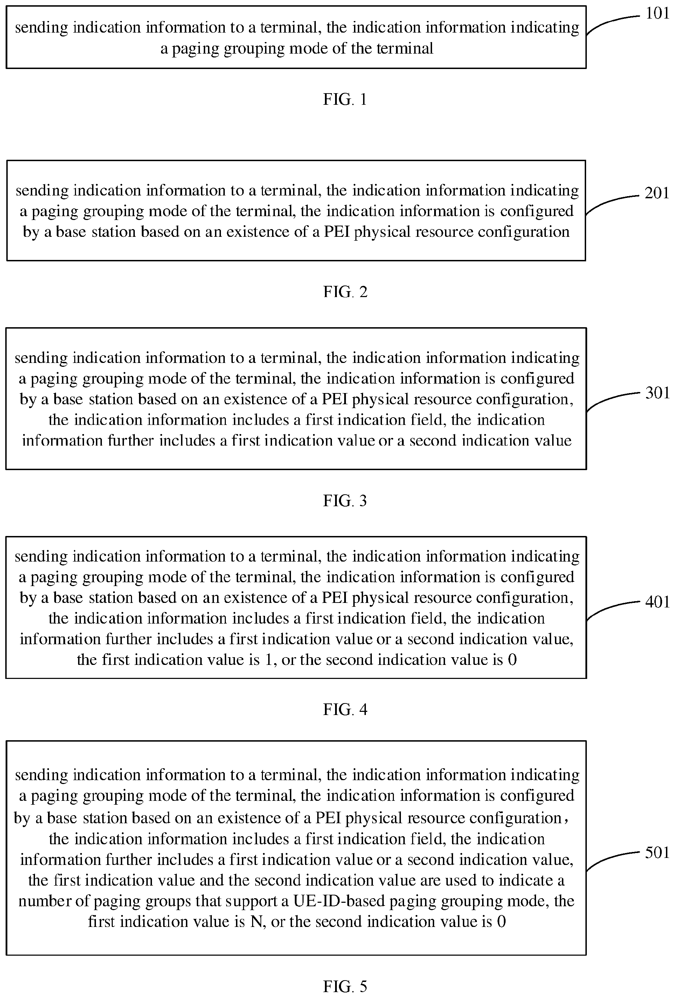

FIG. 1 is a flowchart of a paging grouping method provided in an embodiment of the disclosure. The method is performed by a base station. As illustrated in FIG. 1, the paging grouping method includes the following steps.

Step 101, indication information is sent to a terminal, the indication information indicating a paging grouping mode of the terminal.

In an embodiment of the disclosure, the base station may send the indication information for indicating the paging grouping mode of the terminal to the terminal via Radio Resource Control (RRC) signaling.

As an embodiment, the indication information may be carried in downlink control information (DCI) signaling or using RRC signaling.

As an embodiment, that the indication information may be carried in a DCI format may be that the indication information is carried in a paging early indication (PEI) DCI;

As an embodiment, that the indication information may be carried in RRC may be that the indication information is carried in a system message.

The terminal can be a device that provides voice and/or data connectivity to a user. The terminal may communicate with one or more core networks through a Radio Access Network (RAN). The terminal may be an Internet to things (IoT) terminal, such as a sensor device, a mobile phone (or "cellular" phone), and a computer with an IoT terminal, such as a fixed, portable, pocket, handheld, computer built-in, or vehicle-mounted device. For example, the terminal may be a station (STA), a subscriber unit, a subscriber station, a mobile station, a mobile, a remote station, an access point, a remote terminal, an access terminal, a user terminal, or a user agent. Alternatively, the terminal can also be a device of unmanned aerial vehicle. Alternatively, the terminal can also be an onboard device, such as a vehicle mounted computer with a wireless communication capability, or a wireless terminal connected to an external vehicle mounted computer. Alternatively, the terminal can also be a roadside device, such as a street light, a signal light, or other roadside device with the wireless communication capability.

In an embodiment of the disclosure, the indication information may indicate at least one of the following paging grouping modes:

> a network-assigned paging grouping mode; or
> a user equipment-identity (UE-ID)-based paging grouping mode.

In an embodiment of the disclosure, the network-assigned paging grouping mode may be as follows. A network (such as a core network) assigns a paging grouping mode based on implementation (such as based on an attribute of the terminal or a counted paging probability of the terminal, etc.).

In an embodiment of the disclosure, the UE-ID-based paging grouping mode is a random mode of determining grouping by performing modulo operation on an UE-ID. By performing, in a PEI physical resource configuration broadcast by the base station, the modulo operation on the UE-ID to determine the paging group, consistency of grouping confirmation among three elements, i.e., the terminal, the base station, and the core network, can be achieved. Optionally, the UE-ID-based paging grouping mode can be performed through equation 1:

$$wg = floor\left(floor\left(\frac{UE\_ID}{N \times N_s}\right)/N_n\right) \quad mod \quad N_w \qquad \text{equation 1}$$

where, wg is a paging group identity (ID) corresponding to a selected PEI physical resource; $N$ and $N_s$ are used to indicate a paging density in the time domain. $N$ is a density of paging frames, and $N_s$ is a density of paging subframes in one paging frame. $N_n$ is a frequency domain paging density, for example, $N_n$ may indicate a paging narrow band. $N_w$ is a total number of paging groups. The *floor* function is a downward rounding function. The *mod* function is a modulus function.

Optionally, in an embodiment of the disclosure, the aforementioned indication information is an optional configuration. For example, the base station may configure the indication information when a PEI physical resource configuration exists. In an embodiment of the disclosure, if the base station configures the indication information, the indication information may be indicated as a field value, where different field values indicate supports for different paging grouping modes.

In conclusion, in the paging grouping method provided in the embodiments of the disclosure, the base station may send the indication information indicating the paging grouping mode of the terminal to the terminal, in which the indication information indicates support for at least one of following paging grouping modes: a network-assigned paging grouping mode; or a UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

FIG. 2 is a flowchart of a paging grouping method provided by an embodiment of the disclosure. The method is performed by a base station. As shown in FIG. 2, the paging grouping method may include the following steps.

Step 201, indication information is sent to a terminal, the indication information indicating a paging grouping mode of the terminal, and the indication information is configured by the base station based on an existence of a PEI physical resource configuration. The PEI physical resource configuration is a grouped PEI physical resource configuration. The PEI physical resource configuration may include a time-frequency domain location (such as a search space, etc.), and a DCI format configuration of PEI (such as indicating a total number of bits used for paging grouping, etc.).

In an embodiment of the disclosure, configuring the indication information based on the existence of the PEI physical resource configuration means that, when the PEI physical resource configuration exists (such as when the base station broadcasts the PEI physical resource configuration), the base station can configure the indication information. When the indication information exists, the paging grouping mode of the terminal can be indicated based on the indication information.

In an embodiment of the disclosure, based on the existence of the PEI physical resource configuration, the indication information may include or exclude a first indication field to make the indication information indicate different paging grouping modes.

In an embodiment of the disclosure, the indication information may include a first indication field. The first indication field may be used to indicate that the indication information supports a network-assigned paging grouping mode, or supports both the network-assigned paging grouping mode and a UE-ID-based paging grouping mode. In another embodiment of the disclosure, the indication information does not include the first indication field, then the indication information may indicate support for the UE-ID-based paging grouping mode. Optionally, the first indication field configured by the base station may be the Flag-supportCNassigned field. The first indication field may be carried in an optional form in the indication information, and an existence of the first indication field means that at least the network-assigned paging grouping mode is supported. If a paging group used for network-assigned can also be used for the UE-ID-based paging grouping scheme, it means that both the network-assigned paging grouping mode and the UE-ID-based paging grouping mode are supported. The first indication field may be carried in an optional form in the indication information, and an absence of the first indication field means that all network-assigned PEI grouping resources are used for the UE-ID-based paging grouping mode.

It should be noted that, in an embodiment of the disclosure, if the PEI physical resource configuration does not exist, it indicates that no indication information is configured. That is, the indication information does not exist. In this case, it can be determined that the base station neither supports the network-assigned paging grouping mode nor supports the UE-ID-based paging grouping mode. At this point, the terminal is unable to use a grouping PEI paging message monitoring, which means that none of the two paging grouping modes is supported, and the terminal may fall back to a paging mode of not monitoring the PEI, or it may means that the terminal uses a monitoring mode of non-grouping PEI (i.e., the PEI is a PEI without a paging grouping function).

Based on the above description, Table 1 is a correspondence relationship between indication information and a paging grouping mode indicated by the indication information provided by embodiments of the disclosure.

Table 1

| whether a PEI configuration exists or not | whether the first indication field in the indication information exists or not | paging grouping mode indicated by the indication information |
|---|---|---|
| PEI configuration exists | the first indication field exists in the indication information | support the network-assigned paging grouping mode, or, support both the network-assigned paging grouping mode and the UE-ID-based paging grouping mode |

(continued)

| whether a PEI configuration exists or not | whether the first indication field in the indication information exists or not | paging grouping mode indicated by the indication information |
|---|---|---|
| PEI configuration exists | the first indication field does not exist in the indication information | support the UE-ID-based paging grouping mode |
| PEI configuration does not exist | the indication information does not exist | neither support the network-assigned paging grouping mode nor support the UE-ID-based paging grouping mode |

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in embodiments of the disclosure, different paging grouping modes supported by the base station can be indicated differentially by including or not including the first indication field in the indicating information, providing a new indication method that enriches the diversity of the methods for indicating the paging grouping mode.

FIG. 3 is a flowchart of a paging grouping method provided by an embodiment of the disclosure. The method is performed by a base station. As shown in FIG. 3, the paging grouping method may include the following steps.

Step 301, indication information is sent to a terminal, the indication information indicating a paging grouping mode of the terminal, the indication information is configured by the base station based on an existence of a PEI physical resource configuration, the indication information includes a first indication field, and the indication information also includes a first indication value or a second indication value.

The first indication field essentially indicates that the indication information supports a network-assigned paging grouping mode, or that the supports indication information supports both the network-assigned paging grouping mode and a UE-ID-based paging grouping mode. Therefore, in an embodiment of the disclosure, in addition to the first indication field, the indication information may further include the first indication value or the second indication value to indicate a specific support situation indicated by the indication information. The first indication value may be used to indicate that the indication information supports both the network-assigned paging grouping mode and the UE-ID-based paging grouping mode, and the second indication value may be used to indicate that the indication information supports the network-assigned paging grouping mode.

Furthermore, in an embodiment of the disclosure, when the values of the first indication value and the second indication value are changed, the indicated paging grouping mode may vary. Optionally, the first indication value and the second indication value may indicate different paging grouping modes by assigning a true or false value. For example, the first indication value is a true value of 1, or the second indication value is a false value of 0. Or, different paging grouping modes are indicated by assigning integer values to the first indication value and the second indication value. Furthermore, a detailed introduction to the way of assigning the true or false value to the first indication value and the second indication value, as well as the way of assigning integer values to the first indication value and the second indication value, will be described in subsequent embodiments.

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in embodiments of the disclosure, different types of values can be assigned to the first indication value or the second indication value in the indication information to indicate the paging grouping mode in different ways, further enriching the diversity of the methods for indicating the paging grouping mode and improving the flexibility of the indication process for the paging grouping modes.

FIG. 4 is a flowchart of a paging grouping method provided by an embodiment of the disclosure. The method is performed by a base station. As shown in FIG. 4, the paging grouping method may include the following steps.

Step 401, indication information is sent to a terminal, the indication information indicating a paging grouping mode of the terminal, the indication information is configured by the base station based on an existence of a PEI physical resource configuration, the indication information includes a first indication field, and the indication information also includes a first indication value or a second indication value. The first indication value is a true value of 1, or the second indication value is a false value of 0.

Optionally, the first indication value may be a true value of 1 to indicate that the indication information supports both a network-assigned paging grouping mode and a UE-ID-based paging grouping mode. The second indication value may be a false value of 0 to indicate that the indication information supports the network-assigned paging grouping mode. If the indication field does not exist, it means that all network-configured PEI grouping resources are used for the UE-ID-based paging grouping mode.

For example, Table 2 is a schematic table of the value of the first indication value or the second indication value provided in an embodiment of the disclosure.

Table 2

| whether a PEI configuration exists or not | value of the first indication value or the second indication value | paging grouping mode indicated by the indication information |
|---|---|---|
| PEI configuration exists | the indication information includes the first indication value, and the first indication value is 1 | support both the network-assigned paging grouping mode and the UE-ID-based paging grouping mode |
| PEI configuration exists | the indication information includes the second indication value, and the second indication value is 0 | support the network-assigned paging grouping mode |
| PEI configuration exists | the first indication field does not exist in the indication information | support the UE-ID-based paging grouping mode |
| PEI configuration does not exist | the indication information does not exist | neither support the network-assigned paging grouping mode nor support the UE-ID-based paging grouping mode |

It should be noted that, in an embodiment of the disclosure, the above "the indication information indicates supporting the network-assigned paging grouping mode" may mean that the indication information only supports the network-assigned paging grouping mode. Based on this, all paging groups of a total number of paging groups (such as a total number of paging groups is 8 groups) determined based on the PEI physical resource configuration can be used for grouping in the network-assigned paging grouping mode.

In another embodiment of the disclosure, the above "the indication information indicates supporting the network-assigned paging grouping mode" may further mean that the indication information indicates supporting both the network-assigned paging grouping mode and the UE-ID-based paging grouping mode (i.e., when supporting the network-assigned paging grouping mode, the UE-ID-based paging grouping mode is supported by default). Based on this, a portion of the total number of paging groups can be grouped based on the network-assigned paging grouping mode, and the other portion of the paging groups can be grouped based on the UE-ID-based paging grouping mode. It should be noted that, in an embodiment of the disclosure, the number of groups for paging grouping based on the UE-ID paging grouping mode can be determined based on a protocol agreement. For example, the last group of paging groups can be grouped using the UE-ID-based paging grouping mode based on the protocol agreement.

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in embodiments of the disclosure, different paging grouping modes can be indicated by assigning a true or false value to the first indication value or the second indication value in the indication information, providing another new indication method that further enriches the diversity of the methods for indicating the paging grouping mode.

FIG. 5 is a flowchart of a paging grouping method provided by an embodiment of the disclosure. The method is performed by a base station. As shown in FIG. 5, the paging grouping method may include the following steps.

Step 501, indication information is sent to a terminal, the indication information indicating a paging grouping mode of the terminal, the indication information is configured by the base station based on an existence of a PEI physical resource configuration, the indication information includes a first indication field, the indication information also includes a first indication value or a second indication value, the first indication value and the second indication value are used to indicate a number of paging groups that support a UE-ID-based paging grouping mode, in which the first indication value is N (not 0), or the second indication value is 0. As an embodiment, a physical meaning of the first indication field is to indicate a number of groups using the UE-ID grouping mode.

It should be noted that in an embodiment of the disclosure, the first indication value N is greater than 0 and less than a total number of paging groups determined based on the PEI physical resource configuration, and the first indication value indicates that the indication information supports both the network-assigned paging grouping mode and the UE-ID-based paging grouping mode. The second indication value may be 0 (i.e. a number of paging groups based on the UE-ID-based paging grouping mode is 0 group), and the second indication value indicates that the indication information only supports the network-assigned paging grouping mode. For example, Table 3 is a schematic table of the value of the first indication value or the second indication value provided in an embodiment of the disclosure.

Table 3

| whether a PEI configuration exists or not | value of the first indication value or the second indication value | paging grouping mode indicated by the indication information |
| --- | --- | --- |
| PEI configuration exists | the indication information includes the first indication value, and the first indication value is N | support both the network-assigned paging grouping mode and the UE-ID-based paging grouping mode |
| PEI configuration exists | the indication information includes the second indication value, and the second indication value is 0 | support the network-assigned paging grouping mode |
| PEI configuration exists | the first indication field does not exist in the indication information | support the UE-ID-based paging grouping mode |
| PEI configuration does not exist | the indication information does not exist | neither support the network-assigned paging grouping mode nor support the UE-ID-based paging grouping mode |

For example, in an embodiment of the disclosure, the total number of paging groups determined based on the PEI physical resource configuration is 8 groups. If the first indication field includes the first indication value N, and the first indication value N=2, it indicates that two of the 8 paging groups support the UE-ID-based grouping mode, and the remaining six paging groups support the network-assigned paging grouping mode. If the first indication field includes the second indication value, and the second indication value is 0, it means that there is no paging group supporting the UE-ID-based grouping mode. That is, all of the 8 paging groups support the network-assigned paging grouping mode, so that all of the 8 paging groups can be grouped using the network-assigned paging grouping mode.

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in the embodiments of the disclosure, the number of paging groups supporting the UE-ID-based paging grouping mode can be indicated by assigning the integer value to the first indication value or the second indication value in the indication information, providing another new type of indication method that enriches the diversity of the methods for indicating the paging grouping mode greatly.

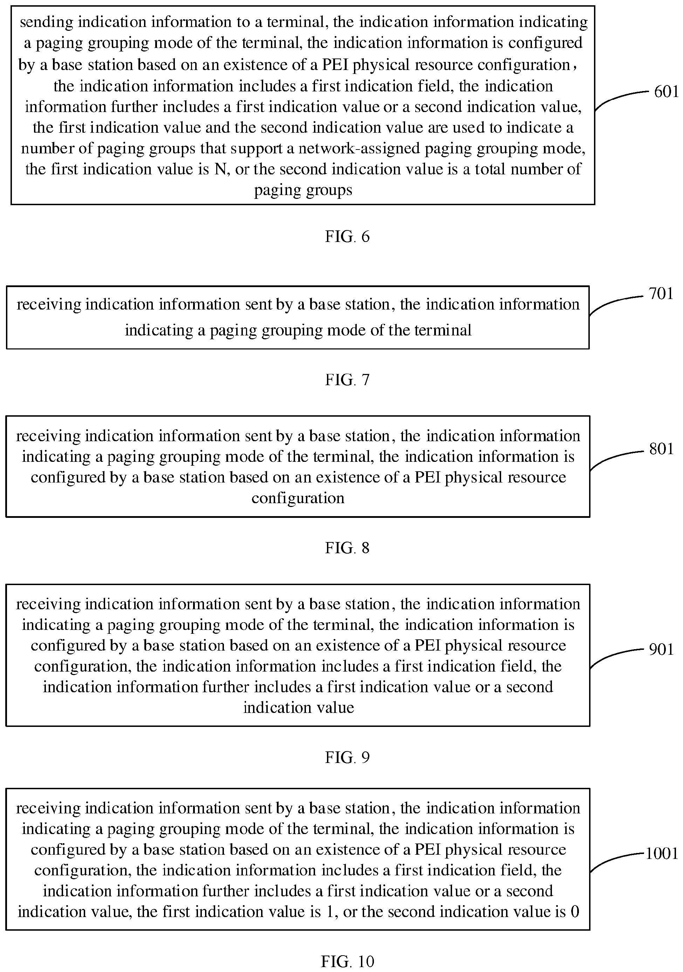

FIG. 6 is a flowchart of a paging grouping method provided by an embodiment of the disclosure. The method is performed by a base station. As shown in FIG. 6, the paging grouping method may include the following steps.

Step 601, indication information is sent to a terminal, the indication information indicating a paging grouping mode of the terminal, the indication information is configured by the base station based on an existence of a PEI physical resource configuration, the indication information includes a first indication field, the indication information also includes a first indication value or a second indication value, the first indication value and the second indication value are used to indicate a number of paging groups that support a network-assigned paging grouping mode, in which the first indication value is N (not 0), or the second indication value is a total number of paging groups. As an embodiment, a physical meaning of the first indication field is to indicate a number of groups using the network-assigned paging grouping mode.

It should be noted that in an embodiment of the disclosure, the first indication value N is greater than 0 and less than the total number of paging groups determined based on the PEI physical resource configuration, and the first indication value indicates that the indication information supports both the network-assigned paging grouping mode and the UE-ID-based paging grouping mode. The second indication value may be the total number of paging groups (i.e. all paging groups support the network-assigned paging grouping mode), and the second indication value indicates that the indication information only supports the network-assigned paging grouping mode. For example, Table 4 is a schematic table of the value of the first indication value or the second indication value provided in an embodiment of the disclosure.

Table 4

| whether a PEI configuration exists or not | value of the first indication value or the second indication value | paging grouping mode indicated by the indication information |
|---|---|---|
| PEI configuration exists | the indication information includes the first indication value, and the first indication value is N | support both the network-assigned paging grouping mode and the UE-ID-based paging grouping mode |
| PEI configuration exists | the indication information includes the second indication value, and the second indication value is a total number of paging groups | support the network-assigned paging grouping mode |
| PEI configuration exists | the first indication field does not exist in the indication information | support the UE-ID-based paging grouping mode |
| PEI configuration does not exist | the indication information does not exist | neither support the network-assigned paging grouping mode nor support the UE-ID-based paging grouping mode |

For example, in an embodiment of the disclosure, the total number of paging groups determined based on the PEI physical resource configuration is 8 groups. If the first indication field includes the first indication value N, and the first indication value N=2, it indicates that two of the 8 paging groups support the network-assigned paging grouping mode, and the remaining six paging groups support the UE-ID-based paging grouping mode. If the first indication field includes the second indication value, and the second indication value is the total number of paging groups, it means that all paging groups support the network-assigned paging grouping mode. That is, all of the 8 paging groups support the network-assigned paging grouping mode, so that all of the 8 paging groups can be grouped using the network-assigned paging grouping mode.

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in the embodiments of the disclosure, the number of paging groups supporting the network-assigned paging grouping mode can be indicated by assigning the integer value to the first indication value or the second indication value in the indication information, providing another new type of indication method that greatly enriches the diversity of the methods for indicating the paging grouping mode.

In an embodiment of the disclosure, if the total number for paging grouping is not configured in the PEI physical resource configuration, the total number for paging grouping of the PEI physical resource configuration can be provided by the indication information. When the indication information includes the first indication value of a number of groups used for the network-assigned paging grouping mode, the indication information can carry a first indication identifier for indicating the paging grouping mode corresponding to the number of groups.

For example, as shown in Table 5, in an embodiment of the disclosure, if the first indication field includes a first indication value N, and the first indication value N=2, it can be determined that there are two paging groups supporting the network-assigned paging grouping mode or the UE-ID-based paging grouping mode. Furthermore, which specific grouping mode is supported is indicated by a first indication identifier. Optionally, the grouping modes can be distinguished by assigning a true or false value to the first indication identifier. If the first indication identifier is set to true, it is determined that the two paging groups support the network-assigned paging grouping mode. If the first indication identifier is set to false, it is determined that the two paging groups support the UE-ID-based paging grouping mode. It can be understood that the first indication identifier can be assigned a false value to support the network-assigned paging grouping mode, and the first indication identifier can be assigned a true value to support the UE-ID-based paging grouping mode. Correspondingly, a number of bits for paging grouping in the PEI physical resource configuration can be indicated by the first indication identifier in the indication information, such as 2 bits.

Table 5

| whether a PEI configuration exists or not | whether a first indication identifier exists in the indication information or not | paging grouping mode indicated by the indication information |
|---|---|---|
| PEI configuration exists | the indication information includes a first indication value, and the first indication value is N | support the network-assigned paging grouping mode or the UE-ID-based paging grouping mode |
| PEI configuration exists | the indication information includes the first indication value, and the first indication value is N, the indication information includes the first indication identifier, and the first indication identifier is true | N paging groups support the network-assigned paging grouping mode |
| PEI configuration exists | the indication information includes the first indication value, and the first indication value is N, the indication information includes the first indication identifier, and the first indication identifier is false | N paging groups support the UE-ID-based paging grouping mode |
| PEI configuration does not exist | the indication information does not exist | neither support the network-assigned paging grouping mode nor support the UE-ID-based paging grouping mode |

In an embodiment of the disclosure, if the total number for paging grouping is not configured in PEI physical resource configuration, the total number for paging grouping of PEI physical resource configuration can be provided by the indication information. When the indication information includes the first indication value of a number of groups used for the network-assigned paging grouping mode, the indication information can carry a first indication identifier and a second indication identifier for indicating the paging grouping mode corresponding to the number of groups, so that the two indication identifiers are used to indicate the support of the two grouping modes respectively. Similar to the first indication identifier in Table 5, the way in which the indication information carries the second indication information is the same as the first indication information. Optionally, the first indication identifier and the second indication identifier can be provided simultaneously or only one of them is provided.

For example, as shown in Table 6, in an embodiment of the disclosure, if the indication information includes a first indication identifier N1 and a second indication identifier N2, and if the first indication identifier N1 is 2 and the second indication identifier N2 is 4, it can be determined that two paging groups support the network-assigned paging grouping mode and four paging groups support the UE-ID-based paging grouping mode. At this point, a number of bits for paging grouping in the PEI physical resource configuration can be indicated by the first indication identifier plus the second indication identifier, such as 2+4 bits. It can be understood that the first indication identifier can be used to indicate support for the UE-ID-based paging grouping mode, and the second indication identifier can be used to indicate support for the network-assigned paging grouping mode.

For example, in an embodiment of the disclosure, if the provided indication information includes the first indication identifier N1, and the first indication identifier N1=2, it indicates that there are two paging groups supporting the network-assigned paging grouping mode. Correspondingly, the number of bits for paging grouping of the PEI physical resource configuration can be indicated by the first indication identifier in the indication information, such as 2 bits.

In an embodiment of the disclosure, it can be understood that if the provided indication information includes the second indication identifier N2, and the second indication N2=2, it indicates that there are two paging groups supporting the UE-ID-based paging grouping mode. Correspondingly, the number of bits for paging grouping of the PEI physical resource configuration can be indicated by the second indication identifier in the indication information, such as 2 bits.

Table 6

| whether a PEI configuration exists or not | whether a first indication identifier and/or a second indication identifier exists in the indication information or not | paging grouping mode indicated by the indication information |
| --- | --- | --- |
| PEI configuration exists | the indication information includes the first indication identifier $N_1$ and the second indication identifier $N_2$ | the first indication identifier $N_1$ support the network-assigned paging grouping mode, and the second indication identifier $N_2$ support the UE-ID-based paging grouping mode |
| PEI configuration exists | the indication information includes the first indication identifier $N_1$ | $N_1$ paging groups support the network-assigned paging grouping mode |
| PEI configuration exists | the indication information includes the second indication identifier $N_2$ | $N_2$ paging groups support the UE-ID-based paging grouping mode |
| PEI configuration does not exist | the indication information does not exist | neither support the network-assigned paging grouping mode nor support the UE-ID-based paging grouping mode |

FIG. 7 is a flowchart of a paging grouping method provided by an embodiment of the disclosure. The method is performed by a terminal. As illustrated in FIG. 7, the paging grouping method includes the following steps.

Step 701, indication information sent by a base station is received, the indication information indicating a paging grouping mode of the terminal.

In an embodiment of the disclosure, the terminal may receive the indication information for indicating the paging grouping mode of the terminal sent by the base station via DCI signaling or RRC signaling.

The indication information may indicate at least one of the following paging grouping modes:

a network-assigned paging grouping mode; or
a UE-ID-based paging grouping mode.

In an embodiment of the disclosure, the network-assigned paging grouping mode may be as follows. A network (such as a core network) assigns a paging grouping mode based on implementation (such as based on an attribute of the terminal or a counted paging probability of the terminal, etc.).

In an embodiment of the disclosure, the UE-ID-based paging grouping mode is a random mode of determining grouping by performing a modulus operation on an UE-ID. By performing, in a PEI physical resource configuration broadcast by the base station, the modulus operation on the UE-ID to determine the paging grouping, consistency of grouping confirmation among three elements, i.e., the terminal, the base station, and the core network, can be achieved. Optionally, the UE-ID-based paging grouping mode can be performed through equation 1:

$$wg = floor\left(floor\left(\frac{UE\_ID}{N \times N_s}\right)/N_n\right) \ mod \ N_w \qquad \text{equation 1}$$

where, wg is a paging group ID corresponding to a selected PEI physical resource; $N$ and $N_s$ are used to indicate a paging density in the time domain. $N$ is a density of paging frames, and $N_s$ is a density of paging subframes in one paging frame. $N_n$ is a frequency domain paging density, for example, $N_n$ may indicate a paging narrow band. $N_w$ is a total number of paging groups. The *floor* function is a downward rounding function. The *mod* function is a modulus function.

Optionally, in an embodiment of the disclosure, the aforementioned indication information is an optional configuration. For example, the base station may configure the indication information when a PEI physical resource configuration exists. In an embodiment of the disclosure, if the base station configures the indication information, the indication information may be indicated as a field value, where different field values indicate supports for different paging grouping modes.

In conclusion, in the paging grouping method provided in the embodiments of the disclosure, the base station may send the indication information indicating the paging grouping mode of the terminal to the terminal, in which the indication information indicates support for at least one of following paging grouping modes: a network-assigned paging grouping mode; or a UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

FIG. 8 is a flowchart of a paging grouping method provided by another embodiment of the disclosure. The method is performed by a terminal. As illustrated in FIG. 8, the paging grouping method includes the following steps.

Step 801, indication information sent by a base station is received, the indication information indicating a paging grouping mode of the terminal, and the indication information is configured by the base station based on an existence of a PEI physical resource configuration.

The relevant introduction of Step 801 may refer to the description of the above embodiments, which are not repeated in this embodiment of the disclosure.

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in embodiments of the disclosure, different paging grouping modes supported by the base station can be indicated differentially by including or not including the first indication field in the indicating information, providing a new indication method that enriches the diversity of the methods for indicating the paging grouping mode.

FIG. 9 is a flowchart of a paging grouping method provided by another embodiment of the disclosure. The method is performed by a terminal. As illustrated in FIG. 9, the paging grouping method includes the following steps.

Step 901, indication information sent by a base station is received, the indication information indicating a paging grouping mode of the terminal, the indication information is configured by the base station based on an existence of a PEI physical resource configuration, the indication information includes a first indication field, and the indication information also includes a first indication value or a second indication value.

The relevant introduction of Step 901 may refer to the description of the above embodiments, which are not repeated in this embodiment of the disclosure.

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in embodiments of the disclosure, different types of values can be assigned to the first indication value or the second indication value in the indication information to indicate the paging grouping mode in different ways, further enriching the diversity of the methods for indicating the paging grouping mode and improving the flexibility of the indication process for the paging grouping modes.

FIG. 10 is a flowchart of a paging grouping method provided by another embodiment of the disclosure. The method is performed by a terminal. As illustrated in FIG. 10, the paging grouping method includes the following steps.

Step 1001, indication information sent by a base station is received, the indication information indicating a paging grouping mode of the terminal, the indication information is configured by the base station based on an existence of a PEI physical resource configuration, the indication information includes a first indication field, and the indication information also includes a first indication value or a second indication value. The first indication value is a true value of 1, or the second indication value is a false value of 0.

The relevant introduction of Step 1001 may refer to the description of the above embodiments, which are not repeated in this embodiment of the disclosure.

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in embodiments of the disclosure, different paging grouping modes can be indicated by assigning a true or false value to the first indication value or the second indication value in the indication information, providing another new indication method that further enriches the diversity of the methods for indicating the paging grouping mode.

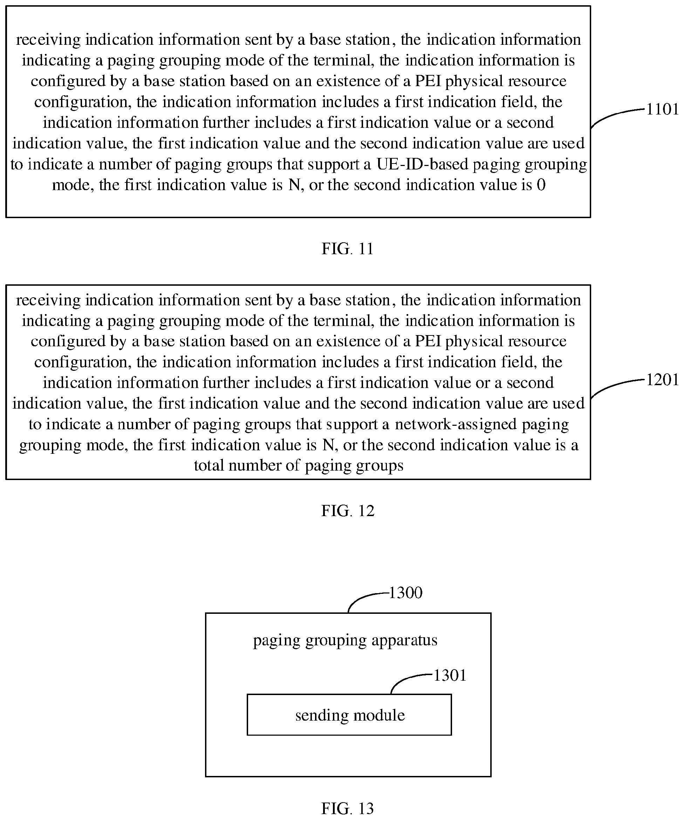

FIG. 11 is a flowchart of a paging grouping method provided by another embodiment of the disclosure. The method is performed by a terminal. As illustrated in FIG. 11, the paging grouping method includes the following steps.

Step 1101, indication information sent by a base station is received, the indication information indicating a paging grouping mode of the terminal, the indication information is configured by the base station based on an existence of a PEI physical resource configuration, the indication information includes a first indication field, the indication information also includes a first indication value or a second indication value, the first indication value and the second indication value are used to indicate a number of paging groups that support a UE-ID-based paging grouping mode, in which the first indication value is N, or the second indication value is 0.

The relevant introduction of Step 1101 may refer to the description of the above embodiments, which are not repeated in this embodiment of the disclosure.

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in the embodiments of the disclosure, the number of paging groups supporting the UE-ID-based paging grouping mode can be indicated by assigning the integer value to the first indication value or the second indication value in the indication information, providing another new type of indication method that enriches the diversity of the methods for indicating the paging grouping mode greatly.

FIG. 12 is a flowchart of a paging grouping method provided by another embodiment of the disclosure. The method is performed by a terminal. As illustrated in FIG. 12, the paging grouping method includes the following steps.

Step 1201, indication information sent by a base station is received, the indication information indicating a paging grouping mode of the terminal, the indication information is configured by the base station based on an existence of a PEI physical resource configuration, the indication information includes a first indication field, the indication information also includes a first indication value or a second indication value, the first indication value and the second indication value are used to indicate a number of paging groups that support a network-assigned paging grouping mode, in which the first indication value is N, or the second indication value is 0.

The relevant introduction of Step 1201 may refer to the description of the above embodiments, which are not repeated in this embodiment of the disclosure.

In conclusion, in the paging grouping method provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

Furthermore, in the embodiments of the disclosure, the number of paging groups supporting the network-assigned paging grouping mode can be indicated by assigning the integer value to the first indication value or the second indication value in the indication information, providing another new type of indication method that greatly enriches the diversity of the methods for indicating the paging grouping mode.

FIG. 13 is a block diagram of a paging grouping apparatus provided by another embodiment of the disclosure. As illustrated in FIG. 11, the apparatus 1300 includes:

a sending module 1301, configured to send indication information to a terminal, the indication information indicating a paging grouping mode of the terminal.

In conclusion, in the paging grouping apparatus provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

In an embodiment of the disclosure, the indication information indicates at least one of the following paging grouping modes:

a network-assigned paging grouping mode; or
a UE-ID-based paging grouping mode.

Furthermore, in an embodiment of the disclosure, the apparatus further configured to:
configure the indication information based on an existence of a PEI physical resource configuration.

Furthermore, in an embodiment of the disclosure,
the indication information includes a first indication field, the first indication field indicating that the indication information supports a network-assigned paging grouping mode, or that the indication information supports both the network-assigned paging grouping mode and a UE-ID-based paging grouping mode.

Furthermore, in an embodiment of the disclosure,
the indication information includes a first indication value, the first indication value indicating that the indication information supports both the network-assigned paging grouping mode and the UE-ID-based paging grouping mode.

Furthermore, in an embodiment of the disclosure,
the indication information includes a second indication value, the second indication value indicating that the indication information supports the network-assigned paging grouping mode.

Furthermore, in an embodiment of the disclosure, the first indication field is not included in the indication information, the indication information indicating support for a UE-ID-based paging grouping mode.

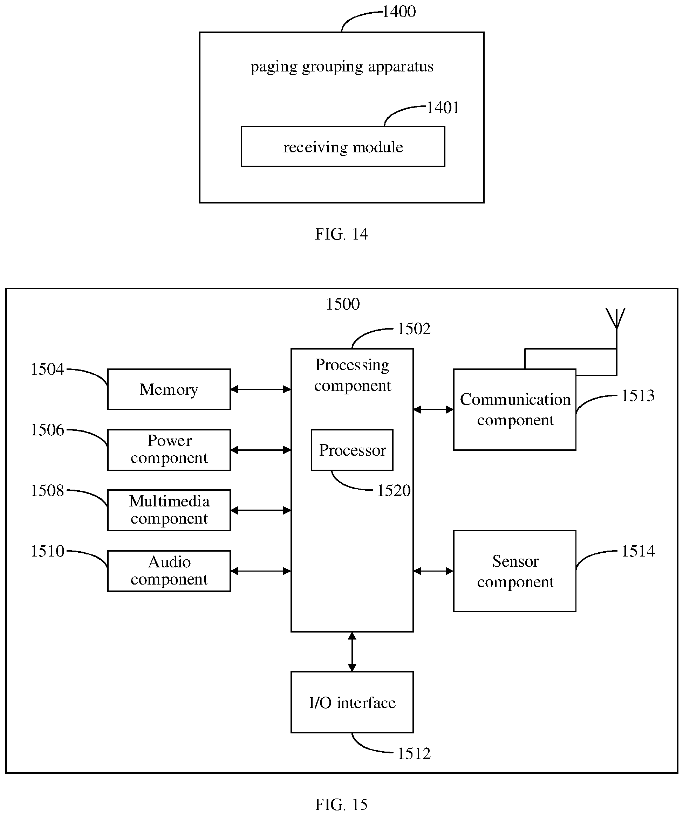

FIG. 14 is a block diagram of a paging grouping apparatus provided by another embodiment of the disclosure. As illustrated in FIG. 12, the apparatus 1400 includes:
a receiving module 1401, configured to receive indication information sent by a base station, the indication information indicating a paging grouping mode of the terminal.

In conclusion, in the paging grouping apparatus provided in the embodiments of the disclosure, the base station may send the indication information indicating the paging grouping mode of the terminal to the terminal, in which the indication information indicates support for at least one of following paging grouping modes: the network-assigned paging grouping mode; or the UE-ID-based paging grouping mode. From this, it can be seen that in the embodiments of the disclosure, the terminal can determine the paging grouping mode supported by the terminal based on the indication information sent by the base station. Therefore, when selecting a specific paging grouping mode subsequently, it can be ensured that the base station and the terminal can select the same paging grouping mode, thereby ensuring the normal progress of a paging process.

In an embodiment of the disclosure, the indication information indicates at least one of the following paging grouping modes:

a network-assigned paging grouping mode; or
a UE-ID-based paging grouping mode.

Furthermore, in an embodiment of the disclosure,
the indication information includes a first indication field, the first indication field indicating that the indication information supports a network-assigned paging grouping mode, or that the indication information supports both the network-assigned paging grouping mode and a UE-ID-based paging grouping mode.

Furthermore, in an embodiment of the disclosure,
the indication information includes a first indication value, the first indication value indicating that the indication information supports both the network-assigned paging grouping mode and the UE-ID-based paging grouping mode.

Furthermore, in an embodiment of the disclosure, the indication information includes a second indication value, the second indication value indicating that the indication information supports the network-assigned paging grouping mode.

Furthermore, in an embodiment of the disclosure, the first indication field is not included in the indication information, the indication information indicating support for a UE-ID-based paging grouping mode.

Embodiments of the disclosure also provide a computer storage medium having executable programs stored thereon. When the executable programs are executed by a processor, the method shown in any of FIGS. 1-6 or FIGS. 7-12 is implemented.

In order to implement the above embodiments, the disclosure further provides a computer program product including a computer program. When the computer program is executed by a computer, the method shown in any of FIGS. 1-6 or FIGS. 7-12 is implemented.

In addition, in order to implement the above embodiments, the disclosure further provides a computer program. When the computer program is executed by a computer, the method shown in any of FIGS. 1-6 or FIGS. 7-12 is implemented.

As illustrated in FIG. 15, FIG. 15 is a block diagram of a terminal UE 1500 provided by an embodiment of the disclosure. For example, the UE 1500 may be a mobile phone, a computer, a digital broadcasting terminal, a message transceiver device, a game console, a tablet device, a medical device, a fitness device and a personal digital assistant.

As illustrated in FIG. 15, the UE 1500 may include one or more of the following components: a processing component 1502, a memory 1504, a power component 1506, a multimedia component 1508, an audio component 1510, an input/output (I/O) interface 1515, a sensor component 1512, and a communication component 1516.

The processing component 1502 typically controls overall operations of the UE 1500, such as the operations associated with display, telephone calls, data communications, camera operations, and recording operations. The processing component 1502 may include one or more processors 1520 to perform all or part of the steps in the above described methods. Moreover, the processing component 1502 may include one or more modules which facilitate the interaction between the processing component 1502 and other components. For example, the processing component 1502 may include a multimedia module to facilitate the interaction between the multimedia component 1508 and the processing component 1502.

The memory 1504 is configured to store various types of data to support the operation of the UE 1500. Examples of such data include instructions for any applications or methods operated on the UE 1500, contact data, phonebook data, messages, pictures, videos, etc. The memory 1504 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1506 provides power to various components of the UE 1500. The power component 1506 may include a power management system, one or more power sources, and any other components associated with the generation, management, and distribution of power in the UE 1500.

The multimedia component 1508 includes a screen providing an output interface between the UE 1500 and a user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a wake-up period of time and a pressure associated with the touch or swipe action. In some embodiments, the multimedia component 1508 includes a front-facing camera and/or a rear-facing camera. When the UE 1500 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1510 is configured to output and/or input audio signals. For example, the audio component 1510 includes a microphone (MIC) configured to receive an external audio signal when the UE 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1515 provides an interface between the processing component 1502 and peripheral interface modules, such as a keyboard, a click wheel, buttons, and the like. The buttons may include, but are not limited to, a home button, a volume button, a starting button, and a locking button.

The sensor component 1512 includes one or more sensors to provide status assessments of various aspects of the UE 1500. For instance, the sensor component 1512 may detect an open/closed status of the UE 1500, relative positioning of components, e.g., the display and the keypad, of the UE 1500, a change in position of the UE 1500 or a component of the UE 1500, a presence or absence of user contact with the UE 1500, an orientation or an acceleration/deceleration of the UE 1500, and a change in temperature of the UE 1500. The sensor component 1512 may include a proximity sensor configured to detect the presence of nearby objects without any physical contact. The sensor component 1512 may also include a light sensor, such as a Complementary Metal Oxide Semiconductor (CMOS) or Charge-Coupled Device (CCD) image sensor, for use in imaging applications. In some embodiments, the sensor component 1512 may also include an accelerometer sensor, a gyroscope sensor, a magnetic sensor, a pressure sensor, or a temperature sensor.

The communication component 1516 is configured to facilitate communication, wired or wirelessly, between the UE 1500 and other devices. The UE 1500 can access a wireless network based on a communication standard, such as Wi-Fi, 2G or 3G, or a combination thereof. In an embodiment, the communication component 1516 receives a broadcast signal from an external broadcast management system or broadcasts associated information via a broadcast channel. In an embodiment, the communication component 1516 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the UE 1500 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

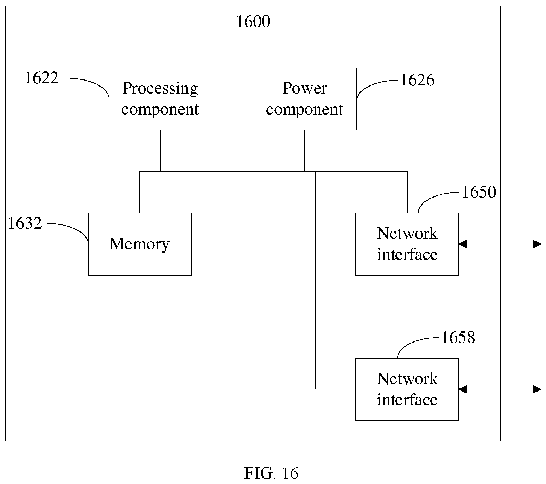

As illustrated in FIG. 16, FIG. 16 is a block diagram of a base station 1600 provided by an embodiment of the disclosure. For example, the base station 1600 may be provided as a base station. As illustrated in FIG. 16, the base station 1600 includes a processing component 1611 consisting of one or more processors, and memory resources represented by a memory 1632 for storing instructions that may be executed by the processing component 1622, such as applications. The application programs stored in the memory 1632 may include one or more modules each corresponding to a set of instructions. In addition, the processing component 1615 is configured to execute the instructions to perform any of the methods described above that are applicable to the base station, for example, the methods shown in FIG. 1.

The base station 1600 may also include a power component 1626 configured to perform power management of the base station 1600, a wired or wireless network interface 1650 configured to connect the base station 1600 to a network, and an I/O interface 16516. The base station 1600 may operate based on an operating system stored in the memory 1632, such as Windows Server TM, Mac OS XTM, UnixTM, LinuxTM, FreeBSDTM, or the like.

In the above embodiments provided in the disclosure, the methods provided in embodiments of the disclosure are introduced from perspectives of the base station and the terminal. In order to achieve the various functions of the method provided in the above embodiments of the disclosure, the base station and the terminal may include hardware structures and software modules, and may implement the above various functions in the form of hardware structures, software modules, or the hardware structures in combination with the software modules. A certain function of the above functions can be executed in the form of a hardware structure, a software module, or a hardware structure in combination with a software module.

Embodiments of the disclosure provide a communication device. The communication device includes a transceiver module and a processing module. The transceiver module may include a sending module and/or a receiving module. The sending module is configured to implement a sending function, the receiving module is configured to implement a receiving function, and the transceiver module is configured to implement a sending and/or receiving function.

The communication device may be a terminal (e.g., the terminal in the aforementioned method embodiments), a device within the terminal, or a device that can be matched and used with the terminal. Or, the communication device may be a network device, a device within the network device, or a device that can be matched and used with the network device.

Embodiments of the disclosure provide another communication device. The communication device may be a network device or a terminal (e.g., the terminal in the aforementioned method embodiments), or may be a chip, a chip system or a processor that supports the network device to realize the above-described methods, or may be a chip, a chip system or a processor that supports the terminal to realize the above-described methods. The device may be used to realize the methods described in the above method embodiments with reference to the description of the above-described method embodiments.

The communication device may include one or more processors. The processor may be a general-purpose processor or a dedicated processor, such as, a baseband processor and a central processor. The baseband processor is used for processing communication protocols and communication data. The central processor is used for controlling the communication device (e.g., a network device, a baseband chip, a terminal, a terminal chip, a distributed unit (DU), or a central unit (CU)), executing computer programs, and processing data of the computer programs.

Optionally, the communication device may include one or more memories on which a computer program may be stored. The processor executes the computer program to cause the communication device to perform the methods described in the above method embodiments. Optionally, the memory may also store data. The communication device and the memory may be provided separately or may be integrated together.

Optionally, the communication device may also include a transceiver and an antenna. The transceiver may be referred to as a transceiver unit, a transceiver machine, or a transceiver circuit, for realizing a transceiver function. The transceiver may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device may also include one or more interface circuits. The interface circuits are used to receive code instructions and transmit them to the processor. The processor runs the code instructions to cause the communication device to perform the method described in the method embodiments.

The communication device is a terminal (e.g., the terminal in the aforementioned method embodiments). The transceiver is configured to perform the method shown in any of FIG. 1 - FIG. 4.

The communication device is a network device. The transceiver is configured to perform the method shown in any of FIG. 5 - FIG. 7.

In an implementation, the processor may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor may store a computer program. When the computer program runs on the processor, the communication device may be caused to perform the methods described in the method embodiments above. The computer program may be solidified in the processor, and in such case the processor may be implemented by hardware.

In an implementation, the communication device may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal (e.g., the terminal in the aforementioned method embodiments), but the scope of the communication device described in the disclosure is not limited thereto, and the structure of the communication device may not be limited by FIG. 14. The communication device may be a stand-alone device or may be part of a larger device. For example, the described communication device may be:

(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication device may be a chip or a chip system, the chip includes a processor and an interface. There may be one or more processors, and there may be multiple interfaces.

Optionally, the chip further includes a memory used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provide a system for determining sidelink duration. The system includes the communication device as a terminal (e.g., the first terminal in the aforementioned method embodiments) and the communication device as a network device. Or, the system includes the communication device as a terminal and the communication device as a network device (e.g., the first terminal in the aforementioned method embodiment).

The disclosure also provides a computer-readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, and not to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

**Claims**

1.  A paging grouping method, performed by a base station, comprising:
    sending indication information to a terminal, the indication information indicating a paging grouping mode of the terminal.

2.  The method of claim 1, wherein the indication information indicates support for at least one of following paging grouping modes:

    a network-assigned paging grouping mode; or
    a user equipment-identity (UE-ID)-based paging grouping mode.

3.  The method of claim 1, further comprising:
    configuring the indication information based on an existence of a paging early indication (PEI) physical resource configuration.

4.  The method of claim 3, further comprising:
    the indication information comprises a first indication field, the first indication field indicating that the indication information supports a network-assigned paging grouping mode, or that the indication information supports both the network-assigned paging grouping mode and a UE-ID-based paging grouping mode.

5.  The method of claim 4, further comprising:
    the indication information comprises a first indication value, the first indication value indicating that the indication information supports both the network-assigned paging grouping mode and the UE-ID-based paging grouping mode.

6.  The method of claim 5, further comprising:
    the indication information comprises a second indication value, the second indication value indicating that the indication information supports the network-assigned paging grouping mode.

7.  The method of claim 3, further comprising:
    a first indication field is not comprised in the indication information, the indication information indicating support for a UE-ID-based paging grouping mode.

8. A paging grouping method, performed by a terminal, comprising:
receiving indication information sent by a base station, the indication information indicating a paging grouping mode of the terminal.

9. The method of claim 8, wherein the indication information indicates support for at least one of following paging grouping modes:

   a network-assigned paging grouping mode; or
   a user equipment-identity (UE-ID)-based paging grouping mode.

10. The method of claim 1, further comprising:
the indication information comprises a first indication field, the first indication field indicating that the indication information supports a network-assigned paging grouping mode, or that the indication information supports both the network-assigned paging grouping mode and a UE-ID-based paging grouping mode.

11. The method of claim 10, further comprising:
the indication information comprises a first indication value, the first indication value indicating that the indication information supports both the network-assigned paging grouping mode and the UE-ID-based paging grouping mode.

12. The method of claim 11, further comprising:
the indication information comprises a second indication value, the second indication value indicating that the indication information supports the network-assigned paging grouping mode.

13. The method of claim 9, further comprising:
a first indication field is not comprised in the indication information, the indication information indicating support for a UE-ID-based paging grouping mode.

14. A paging grouping apparatus, comprising:
a sending module, configured to send indication information to a terminal, the indication information indicating a paging grouping mode of the terminal.

15. A paging grouping apparatus, comprising:
a receiving module, configured to receive indication information sent by a base station, the indication information indicating a paging grouping mode of the terminal.

16. A communication device, comprising:

   a processor; and
   a memory having a computer program stored thereon;
   wherein the processor performs the computer program stored on the memory to cause the communication device to perform the method of any one of claims 1-7.

17. A communication device, comprising:

   a processor; and
   a memory having a computer program stored thereon;
   wherein the processor performs the computer program stored on the memory to cause the communication device to perform the method of any one of claims 8-13.

18. A communication device, comprises: a processor and an interface circuit, wherein

   the interface circuit is configured to receive code instructions and transmit the code instructions to the processor; and
   the processor is configured to run the code instructions to perform the method of any one of claims 1-7.

19. A communication device, comprises: a processor and an interface circuit, wherein

   the interface circuit is configured to receive code instructions and transmit the code instructions to the processor;

and
the processor is configured to run the code instructions to perform the method of any one of claims 8-13.

20. A computer-readable storage medium for storing instructions, wherein when the instructions are executed, the method of any one of claims 1-7 is implemented.

21. A computer-readable storage medium for storing instructions, wherein when the instructions are executed, the method of any one of claims 8-13 is implemented.

sending indication information to a terminal, the indication information indicating a paging grouping mode of the terminal — 101

FIG. 1

sending indication information to a terminal, the indication information indicating a paging grouping mode of the terminal, the indication information is configured by a base station based on an existence of a PEI physical resource configuration — 201

FIG. 2

sending indication information to a terminal, the indication information indicating a paging grouping mode of the terminal, the indication information is configured by a base station based on an existence of a PEI physical resource configuration, the indication information includes a first indication field, the indication information further includes a first indication value or a second indication value — 301

FIG. 3

sending indication information to a terminal, the indication information indicating a paging grouping mode of the terminal, the indication information is configured by a base station based on an existence of a PEI physical resource configuration, the indication information includes a first indication field, the indication information further includes a first indication value or a second indication value, the first indication value is 1, or the second indication value is 0 — 401

FIG. 4

sending indication information to a terminal, the indication information indicating a paging grouping mode of the terminal, the indication information is configured by a base station based on an existence of a PEI physical resource configuration, the indication information includes a first indication field, the indication information further includes a first indication value or a second indication value, the first indication value and the second indication value are used to indicate a number of paging groups that support a UE-ID-based paging grouping mode, the first indication value is N, or the second indication value is 0 — 501

FIG. 5

sending indication information to a terminal, the indication information indicating a paging grouping mode of the terminal, the indication information is configured by a base station based on an existence of a PEI physical resource configuration, the indication information includes a first indication field, the indication information further includes a first indication value or a second indication value, the first indication value and the second indication value are used to indicate a number of paging groups that support a network-assigned paging grouping mode, the first indication value is N, or the second indication value is a total number of paging groups

— 601

FIG. 6

receiving indication information sent by a base station, the indication information indicating a paging grouping mode of the terminal

— 701

FIG. 7

receiving indication information sent by a base station, the indication information indicating a paging grouping mode of the terminal, the indication information is configured by a base station based on an existence of a PEI physical resource configuration

— 801

FIG. 8

receiving indication information sent by a base station, the indication information indicating a paging grouping mode of the terminal, the indication information is configured by a base station based on an existence of a PEI physical resource configuration, the indication information includes a first indication field, the indication information further includes a first indication value or a second indication value

— 901

FIG. 9

receiving indication information sent by a base station, the indication information indicating a paging grouping mode of the terminal, the indication information is configured by a base station based on an existence of a PEI physical resource configuration, the indication information includes a first indication field, the indication information further includes a first indication value or a second indication value, the first indication value is 1, or the second indication value is 0

—1001

FIG. 10

receiving indication information sent by a base station, the indication information indicating a paging grouping mode of the terminal, the indication information is configured by a base station based on an existence of a PEI physical resource configuration, the indication information includes a first indication field, the indication information further includes a first indication value or a second indication value, the first indication value and the second indication value are used to indicate a number of paging groups that support a UE-ID-based paging grouping mode, the first indication value is N, or the second indication value is 0

— 1101

FIG. 11

receiving indication information sent by a base station, the indication information indicating a paging grouping mode of the terminal, the indication information is configured by a base station based on an existence of a PEI physical resource configuration, the indication information includes a first indication field, the indication information further includes a first indication value or a second indication value, the first indication value and the second indication value are used to indicate a number of paging groups that support a network-assigned paging grouping mode, the first indication value is N, or the second indication value is a total number of paging groups

— 1201

FIG. 12

— 1300

paging grouping apparatus

— 1301

sending module

FIG. 13

1400

paging grouping apparatus

1401

receiving module

FIG. 14

1500

1502

Processing
component

1504 — Memory

1506 — Power
component

1508 — Multimedia
component

1510 — Audio
component

Processor

1520

Communication
component — 1513

Sensor
component — 1514

I/O interface

1512

FIG. 15

1600

1622 — Processing component

Power component — 1626

1632 — Memory

Network interface — 1650

Network interface — 1658

FIG. 16

| **INTERNATIONAL SEARCH REPORT** | International application No. |
|---|---|
| | **PCT/CN2021/124231** |

**A. CLASSIFICATION OF SUBJECT MATTER**

H04W 68/02(2009.01)i

According to International Patent Classification (IPC) or to both national classification and IPC

**B. FIELDS SEARCHED**

Minimum documentation searched (classification system followed by classification symbols)

H04W H04L H04Q

Documentation searched other than minimum documentation to the extent that such documents are included in the fields searched

Electronic data base consulted during the international search (name of data base and, where practicable, search terms used)

CNTXT; 3GPP; ENTXTC; ENTXT; WPABS; WPABSC; VEN; CNKI: 寻呼, 分组, 子组, 网络, 分配, 配置, 标识, id, paging, grouping, sub-group, network, configuration, identifier

**C. DOCUMENTS CONSIDERED TO BE RELEVANT**

| Category* | Citation of document, with indication, where appropriate, of the relevant passages | Relevant to claim No. |
|---|---|---|
| X | VIVO. "UE Subgrouping for Paging Enhancement"<br>*3GPP TSG-RAN WG2 Meeting #114-e R2-2104909*, 11 May 2021 (2021-05-11),<br>text, section 2 | 1-21 |
| A | CN 111356216 A (HUAWEI TECHNOLOGIES CO., LTD.) 30 June 2020 (2020-06-30)<br>entire document | 1-21 |
| A | CN 113260023 A (VIVO COMMUNICATION TECHNOLOGY CO., LTD.) 13 August 2021<br>(2021-08-13)<br>entire document | 1-21 |
| A | WO 2021163890 A1 (HUAWEI TECHNOLOGIES CO., LTD.) 26 August 2021 (2021-08-26)<br>entire document | 1-21 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 June 2022** | **06 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/124231**

| Patent document cited in search report | | | Publication date (day/month/year) | Patent family member(s) | | | Publication date (day/month/year) |
|---|---|---|---|---|---|---|---|
| CN | 111356216 | A | 30 June 2020 | WO | 2020135019 | A1 | 02 July 2020 |
| CN | 113260023 | A | 13 August 2021 | None | | | |
| WO | 2021163890 | A1 | 26 August 2021 | None | | | |

Form PCT/ISA/210 (patent family annex) (January 2015)